# EUROPEAN PATENT SPECIFICATION

(11) **EP 3 292 255 B1**
(45) Date of publication and mention of the grant of the patent: **11.12.2019**
(21) Application number: 15753498.3
(22) Date of filing: 04.05.2015
(51) Int. Cl.: E04C 2/22, E03F 5/06, E04F 19/10, E04B 9/34, E04C 2/42

(54) **COMPOUND STRUCTURE MADE OF COMPOSITE MATERIAL AND METHOD OF PRODUCTION**
VERBUNDSTRUKTUR AUS VERBUNDSTOFF UND VERFAHREN ZUR HERSTELLUNG
STRUCTURE DE COMPOSÉ CONSTITUÉE D'UN MATÉRIAU COMPOSITE ET PROCÉDÉ DE PRODUCTION

(43) Date of publication of application: 14.03.2018
(73) Proprietor: Montagnese, Ruggero, 33019 Tricesimo (IT)
(72) Inventor: MONTAGNESE, Ruggero, 33019 Tricesimo (UD) (IT); ZINUTTI Angelo, 33019 Tricesimo (UD) (IT)
(74) Representative: Petraz, Davide Luigi
(86) International application number: PCT/IT2015/000120
(87) International publication number: WO 2016/178254

(56) References cited:
- DE-A1- 2 602 114
- GB-A- 2 221 643
- US-A1- 2004 035 071
- US-A1- 2006 070 345

## Description

### FIELD OF THE INVENTION

The present invention concerns a compound structure made of composite material and the corresponding method of production.

In particular, the compound structure, hereafter also called grille, according to the present invention can be provided with reinforcement fibers such as glass fibers, carbon fibers, boron fibers or aramid fibers and polyester resins.

The present invention is applied, although not exclusively, in compound structures for walkable floors such as gangways, stairs, parapets, covers for basement windows or windows in general, or to make fences, gates or for structural elements such as formworks, sluice gates or floors.

### BACKGROUND OF THE INVENTION

Compound structures made of composite material are known, also called pultruded grilles, reinforced with fibers and normally consisting of parallel bars connected to each other by round pieces glued or wedged transverse to the parallel bars. Examples of known compound structures are disclosed in US-A-2006/0070345 and DE-A-26.02.114.

Reinforced plastic grilles are also known, consisting of monolithic articles made by molding, also large-sized, with different types of mesh, different thickness of the bars and different thickness of the article.

It is known that, depending on use, a grille must have resistance to the stresses to which it is subjected during use.

Within the framework of grilles made of polymer resins, it is known to increase their resistance by incorporating fibers, for example glass fibers, carbon fibers, and aramid fibers, also known commercially as Kevlar® fibers. Grilles made of fiberglass or PRFG are known, for example, that is, a plurality of glass fibers incorporated in polyester resins.

The grille is obtained using known molding techniques, molding a polymer resin which, polymerizing, incorporates inside itself the fibers present, generating the grille with predefined mechanical properties.

Known grilles normally consist of a series of first oblong elements and a series of second oblong elements made in a single body to define a reticular structure.

The first oblong elements are disposed substantially parallel with each other in a first direction, while the second oblong elements are disposed substantially parallel with each other in a second direction, orthogonal to the first direction. In this way the first and second oblong elements define the reticular structure with a plurality of apertures or cavities.

Since the oblong elements are in practice made by molding, they have a rectangular cross section, or trapezoid with a slight angle that allows them to be removed from the mold, and have no undercuts. In particular, the trapezoid section provides opposite inclined sides to define a removal angle of about 2°-3° to allow the grille to be removed from the mold.

A typical example of a grille used for example for walkways is defined by a reticular mesh with a square shape and a side of about 38mm, having a height/thickness of about 38mm and a thickness of the oblong elements that varies from 5mm of the lower side to 7mm of the upper side.

Known grilles are particularly heavy, however, and this often conflicts with the need to reduce the overall weights.

Furthermore, known grilles have poor resistance to mechanical stresses and, if it is necessary to reach high bearing capacities, an extremely heavy and expensive grille will be required, with a large quantity of material required to make it.

Grilles are also known which consist of the reticular structure described above, on a flat surface of which a continuous flat layer is coupled in a single body or glued, to close, on the side of the flat surface, the apertures or cavities defined between the oblong elements. When it is made in a single body with the oblong elements, the flat layer is reinforced with glass fibers of the "mat" type, and gives further bearing capacity to the article.

However, this solution is particularly expensive due to the large quantity of material used, and is extremely heavy.

One purpose of the present invention is to obtain a compound structure that is less heavy than similar compound structures in the state of the art, with the same properties of mechanical resistance. Merely by way of example, one purpose of the present invention is to make a compound structure which, with the same resistance and rigidity, has a saving in weight of at least 20%-30% or more.

Another purpose of the present invention is to make a compound structure that has greater structural properties of resistance to mechanical stress than in the state of the art. In particular, another purpose of the present invention is to make a compound structure in which the capacities of bearing resistance on a vertical plane are increased.

Another purpose is to perfect a method to make a compound structure with properties of mechanical resistance that are equal to or greater than a known compound structure with the same weight.

Another purpose of the present invention is to drastically reduce the production times of a compound structure, with the advantage of reduced production costs.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a compound structure made of composite material, such as fiber-reinforced polymer resins, comprises first oblong elements reciprocally distanced and parallel to each other and second oblong elements reciprocally distanced and parallel to each other and crisscrossed with respect to the first oblong elements.

The first oblong elements and second oblong elements are made in a single body to define a reticular structure with a monolithic flat shape.

According to one aspect of the present invention, at least one of either the first oblong elements or the second oblong elements have a cross section that is T-shaped and/or L-shaped, that is, defined by a first portion with an elongated quadrangular shape and by a second portion with an elongated quadrangular shape, and wherein the first portion is located incident against the second portion.

This particular T- and/or L-shaped configuration of the cross section of the oblong elements allows to obtain a compound structure that is lighter than state-of-the-art structures with the same mechanical resistance. This leads to a reduced quantity of material needed to make the compound structure and therefore to lower costs of the raw material used. Furthermore, with this solution the oblong elements have a continuous cross section and are not joined in the longitudinal direction, which is usually more stressed.

The present invention also concerns a method for making a compound structure of composite material, such as fiber-reinforced polymer resins, which provides to make in a single body first oblong elements reciprocally distanced and parallel to each other and second oblong elements reciprocally distanced and parallel to each other and crisscrossed with respect to the first oblong elements to define a reticular structure.

According to one aspect of the present invention, the method provides to make at least one of either the first oblong elements or the second oblong elements with a cross section that is T-shaped and/or L-shaped.

Also described is an apparatus for making a compound structure that comprises at least one mold defining a molding cavity in which to dispose at least one material to make the compound structure. The molding cavity is defined by a plurality of first oblong grooves made reciprocally distanced and parallel to each other, and by a plurality of second oblong grooves made reciprocally distanced and parallel to each other and crisscrossed, with no break in continuity, with respect to the first oblong grooves.

At least one of either the first oblong grooves or the second oblong grooves have a cross section that is T-shaped and/or L-shaped.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view of a compound structure according to the present invention, the flat element not being shown;
- fig. 2 is an exploded perspective view of a compound structure according to a variant of fig. 1;
- fig. 3 is a cross section of a compound structure in the variant in fig. 2;
- fig. 4 is a schematic illustration of a cross section of an apparatus for making a compound structure according to the present invention;
- fig. 5 is an exploded perspective view of a compound structure according to the invention;
- fig. 6 is a section of a compound structure according to the variant in fig. 5;
- fig. 7 is a section of a compound structure according to another variant.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

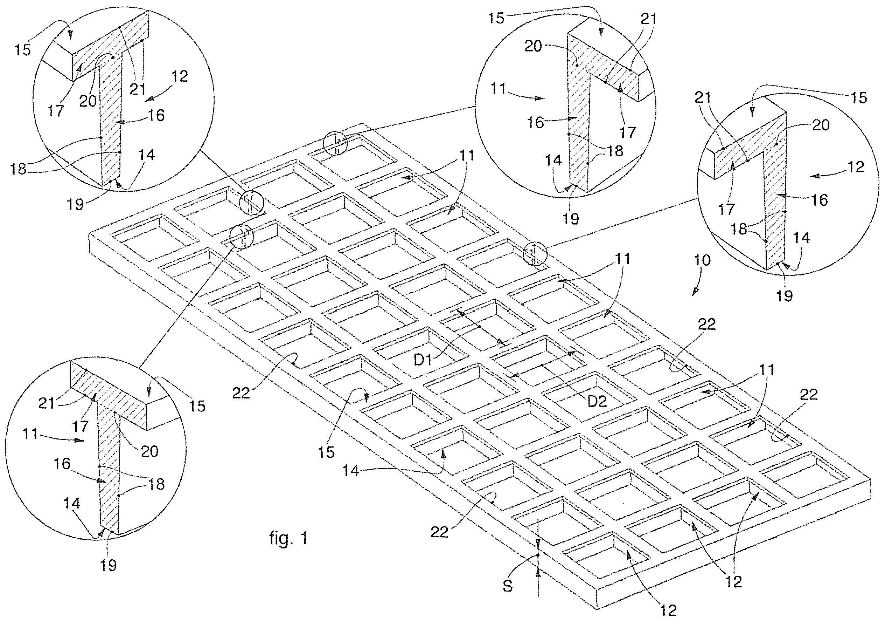

According to the present description and with reference to fig. 1, the invention concerns a compound structure 10 made of composite material.

The compound structure 10 comprises a plurality of first oblong elements 11 reciprocally distanced and parallel to each other and a plurality of second oblong elements 12 reciprocally distanced and parallel to each other.

The second oblong elements 12 are made in a single body and crisscrossed with respect to the first oblong elements 11 to define a reticular structure 13 with a flat shape.

According to the solution shown in fig. 1, the second oblong elements 12 are located orthogonal to the first oblong elements 11, which allows to make uniform the mechanical resistance of the compound structure 10 in all the directions of the plane.

According to the present invention, the crisscrossed disposition of the first oblong elements 11 and the second oblong elements 12 allows to define between the latter apertures or cavities 22 that confer the grille structure.

The apertures 22 can have a rectangular or square shape if the first oblong elements 11 and second oblong elements 12 are disposed substantially orthogonal to each other, and they can have a rhomboid or parallelogram shape if they intersect each other by an angle other than 90°.

The reticular structure 13 has a first flat surface 14 and a second flat surface 15, opposite the first flat surface 14.

The first flat surface 14 and/or the second flat surface 15 can be smooth, or can be irregular, rough or knurled with an anti-slip function.

According to one aspect of the present invention, at least one of either the first oblong elements 11 or the second oblong elements 12 have a cross section that is T-shaped or L-shaped (fig. 1).

The T- or L-shaped cross section confers on each oblong element 11 and/or 12 a greater bearing capacity of resistance to stresses, and in particular to flexional stresses compared with known solutions where the transverse elements have a substantially rectangular shape.

The more it is possible to take material distant from the neutral axis, the more a T- or L-shaped cross section can maximize the resistance of a structural element to vertical stresses. And the more it is possible to distribute the material symmetrically with respect to the neutral, horizontal axis, the more the overall weight of the reticular structure 13 is reduced.

In this way it is possible to obtain, given the same weight, a compound structure 10 with much greater resistance than state-of-the-art compound structures. Moreover, thanks to this, given the same mechanical resistance, it is possible to reduce the overall weight of the compound structure 10, and also the quantity of material used to make it, which also gives advantages in terms of production costs.

According to a possible variant, shown in the attached drawings, both the first oblong elements 11 and the second oblong elements 12 have a T-shaped and/or L-shaped cross section. This solution allows to make uniform the bearing capacity of the compound structure 10 in the directions lying on a plane.

By T-shaped or L-shaped cross section we mean a section defined by a first portion 16 and a second portion 17, both with an elongated quadrangular shape, and wherein the first portion 16 is located incident against the second portion 17.

In the case of a T-shaped cross section, the first portion 16 is located incident against the second portion 17 in an intermediate zone of the latter.

In the case of an L-shaped cross section, the first portion 16 is located incident against the second portion 17 in an end edge of the latter.

According to possible forms of embodiment, the first oblong elements 11 and the second oblong elements 12 can have the L-shaped section in correspondence with the perimeter edges of the reticular structure 13, while the other oblong elements 11, 12 have a T-shaped cross section shape.

According to a possible solution, the first oblong elements 11 and the second oblong elements 12 can have a thickness of the cross section comprised between about 3mm and 10mm, preferably between 4mm and 8mm, and a height of the cross section comprised between 20mm and 50mm, preferably between 25mm and 45mm.

The first portion 16 of the first oblong elements 11 and second oblong elements 12 is disposed with its elongated development incident toward the first flat surface 14, while the second portion 17 of the first oblong elements 11 and second oblong elements 12 is disposed with its elongated development parallel to the second flat surface 15.

The first portions 16 of the first oblong elements 11 and second oblong elements 12 define with one of their sides the first flat surface 14, while the second portions 17 define with one of their sides the second flat surface 15.

According to the form of embodiment shown in fig. 1, the first portion 16 is defined by two bigger sides 18, equal in size and opposite each other, and by a pair of smaller sides, that is, a first smaller side 19 and a second smaller side 20 connected to the bigger sides 18 and having smaller sizes than them.

The second smaller side 20 is connected to the second portion 17, while the first smaller side 19 faces toward the first flat surface 14. The first smaller sides 19 of the first portions 16 define the first flat surface 14.

According to a possible solution, the second smaller side 20 is bigger than the first smaller side 19 and the bigger sides 18 are disposed converging with respect to each other toward the first smaller side 19. The first portion 16 has a substantially trapezoid shape, with the smaller base facing toward the first flat surface 14.

The trapezoid shape allows to define a removal angle for the possible extraction of the compound structure 10 from a mold during the production steps as described hereafter.

According to a variant, the first smaller side 19 and the second smaller side 20 can be the same size, so that the first portion 16 is substantially a rectangle.

The second portion 17 is defined by two bigger sides 21, of which one is connected to the first portion 16 and the other facing and defining the second flat surface 15 of the reticular structure 13.

According to the form of embodiment shown in fig. 1, the second portion 17 is substantially rectangular in shape, although other shapes are not excluded, for example trapezoid, in which the bigger side 21 defining the bigger base of the trapezium is associated with the first portion 16 and the bigger side 21 defining the smaller base of the trapezium faces toward the second flat surface 15.

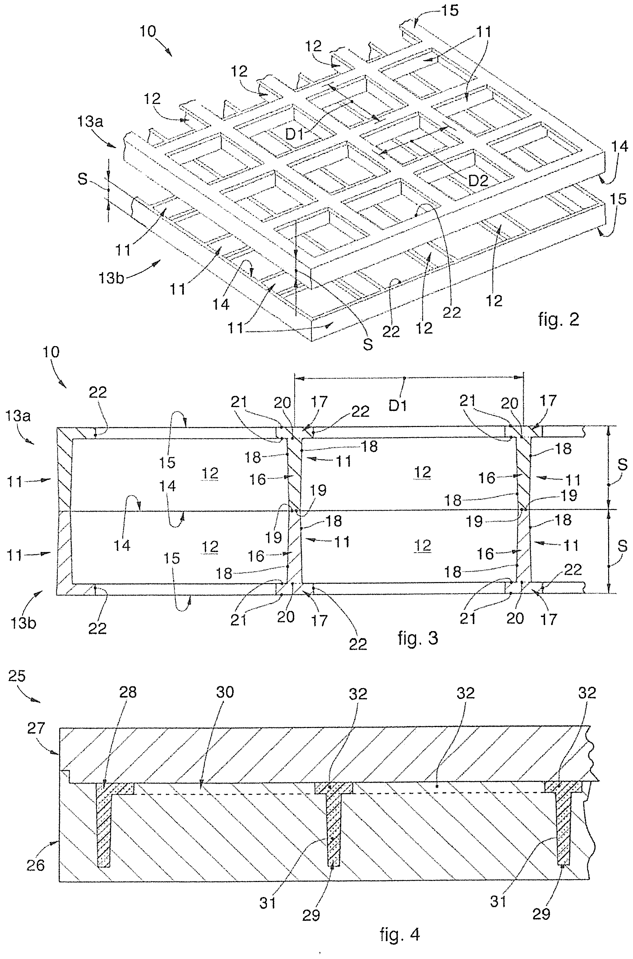

According to a possible variant shown in figs. 2 and 3, the compound structure 10 comprises a first reticular structure 13a and a second reticular structure 13b, substantially analogous to the above description referring to the reticular structure 13 in fig. 1, and are overlapping and reciprocally coupled.

According to a possible solution, the first reticular structure 13a and second reticular structure 13b are substantially identical, so that they can completely overlap. Or it can be provided that the distances between the first oblong elements 11 and the distances between the second oblong elements 12 are substantially identical for the first reticular structure 13a and the second reticular structure 13b.

This solution allows to define a compound structure 10 with a symmetrical distribution of the weight and material with respect to its neutral axis which in this case corresponds to the join plane between the first reticular structure 13a and the second reticular structure 13b. This solution allows to obtain a compound structure 10 with isotropic characteristics of mechanical resistance.

In some variants, the first reticular structure 13a and the second reticular structure 13b have different geometric sizes of the first oblong elements 11 and the second oblong elements 12.

According to this variant, it can in any case be provided to distribute the material symmetrically with respect to the neutral axis which in this case may not correspond to the join plane between the first reticular structure 13a and the second reticular structure 13b. In this case it is possible to obtain a compound structure 10 with orthotropic characteristics of mechanical resistance. This last characteristic can also be defined by different widths and/or lengths of the first portions 16 or second portions 17 of the oblong elements 11, 12.

According to a possible solution, the coupling of the first reticular structure 13a and the second reticular structure 13b is obtained by gluing. This solution allows to obtain the first reticular structure 13a and the second reticular structure 13b in a monolithic body with great mechanical resistance.

Gluing can be carried out using vinyl ester glues, epoxy glues etc., while the compound structure 10 is made with isophthalic, bisphenol or orthophthalic resins. In particular, it may be provided to use gluing resins similar to the material of the first reticular structure 13a and the second reticular structure 13b, and/or to use thickened resins.

Gluing is obtained in such a manner as to support the shear stresses encountered with the horizontal section. Indeed, as is known, shear stresses are normally much smaller than the traction and compression stresses caused by the flexion of vertically stressed elements.

According to a variant, the coupling of the first reticular structure 13a and the second reticular structure 13b can be achieved with mechanical connections, for example threaded connections, brackets, nails, rivets or suchlike.

According to the solution shown in fig. 2, the first reticular structure 13a and the second reticular structure 13b are coupled to each other with the respective first flat surfaces 14.

According to a possible solution, the first reticular structure 13a and the second reticular structure 13b are coupled by overlapping the first portions 16 of the first reticular structure 13a above the first portions 16 of the second reticular structure 13b.

According to one solution, the first portions 16 of the first reticular structure 13a are located completely overlapping the first portions 16 of the second reticular structure 13b, in particular in correspondence with their first smaller sides 19. This solution allows to increase the interface surface between the first reticular structure 13a and the second reticular structure 13b, in this way also increasing the resistance of reciprocal connection between them.

Furthermore, this solution allows to define cross sections of the compound structure 10 shaped like a double T or a C, and therefore a compound structure 10 able to resist stresses, for example flexional, acting on the first flat surface 14 or the second flat surface 15, irrespective of the specific installation mode.

The cross sections of the compound structure 10 shaped like a double T are defined by coupling the first oblong elements 11 and the second oblong elements 12 of the first reticular structure 13a with those of the second reticular structure 13b.

This solution allows to obtain a compound structure 10 which otherwise, with a simple molding operation, would be unobtainable because of the undercuts that are defined between the first reticular structure 13a and the second reticular structure 13b.

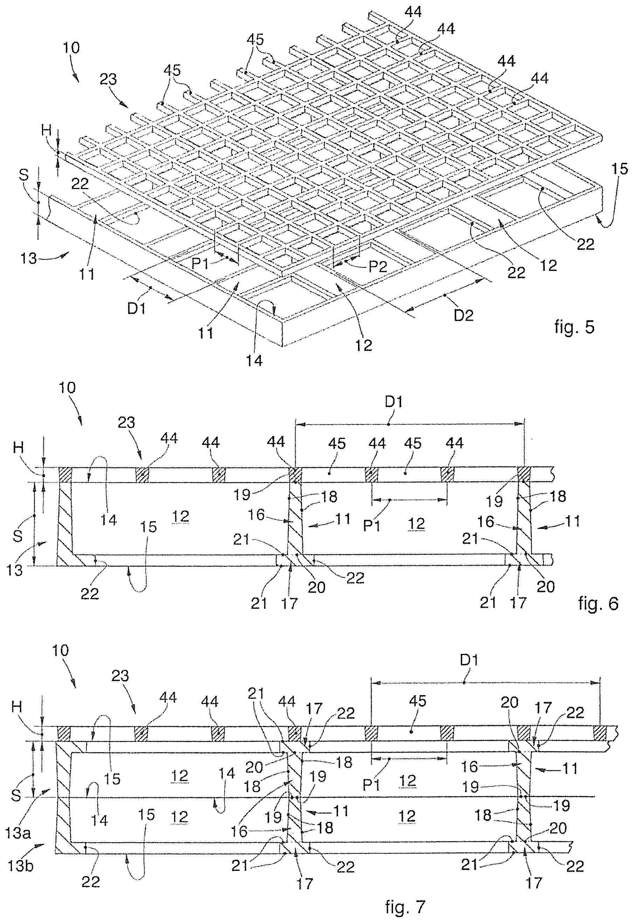

Figs. 5 and 6 show a compound structure 10 comprising at least one reticular structure 13 as defined above and a flat element 23 overlapping and coupled with a surface, for example with either the first flat surface 14 or the second flat surface 15. In this way, it is possible to define a bearing structural part, defined by the at least one reticular structure 13, and a walking plane, defined by the flat element 23.

According to some forms of embodiment of the present invention, the flat element 23 can be made with polymer resins, for example fiber-reinforced to give greater mechanical resistance. It is advantageous to provide, for example, that the material that the flat element 23 is made of is substantially identical to, or at least compatible with, the material that the reticular structure 13 is made of. This facilitates for example the gluing operations of the reticular structure 13 and the flat element 23. Merely by way of example, the flat element 23 can be made of composite material reinforced for example with glass fibers, carbon fibers, Kevlar or other reinforcement material. However, it cannot be excluded that, in other forms of embodiment, the flat element 23 can be made of low-cost plastic material, for example polyethylene, polyamide, ABS, PVC or suchlike.

According to some variants, the flat element 23 can be made of different materials, other than plastic, for example wood or its derivatives.

The flat element 23 can have different sizes, starting from a tile format, for example 250mm-300mm per side, and can also have the same size as the reticular structure 13, which merely by way of example can be 1220mm in width and 3360mm in length, or more. In this case a plurality of flat elements 23 can be associated on the reticular structure 13, 13a, 13b.

The reticular structure 13, 13a, 13b, merely by way of example, can have a thickness S comprised between 20mm and 60mm.

The flat element 23 can have a thickness or height H comprised between 5mm and 15mm, in the case shown here, about 8mm.

The flat element 23 can have a smaller thickness than the reticular structure 13, which in practice has a structural support function and collaborates in improving bearing capacity.

The flat element 23 can have different colors, which can give the compound structure 10 and the article on which it is installed a particular esthetic value.

The flat element 23 can be coupled with the reticular structure 13 by mechanical connections, for example by bolting, or alternatively by gluing as described above, by broaching, using pins interposed between the two components.

The flat element 23 in turn defines a support surface, or a walkable surface, and gives greater structural rigidity to the compound structure 10.

The final result is therefore a compound structure 10 which can function as a flooring and can vary from very elegant to simply functional, with mechanical characteristics similar to comparable state-of-the-art articles, but much less heavy, even in the order of 30% or more.

According to the invention, see figs. 5 and 6, the flat element 23 has a reticular conformation defined, in a single body, by first segments 44 and second segments 45, having an oblong development and disposed crisscrossed with respect to each other.

According to the form of embodiment shown in figs. 5 and 6, at least some of the first segments 44 and the second segments 45 are disposed in a position coordinated with the first oblong elements 11 and/or respectively with the second oblong elements 12.

In particular, it can be provided that at least some of the first segments 44 are positioned resting on the first oblong elements 11 and/or at least some of the second segments 45 are positioned resting on the second oblong elements 12.

It is advantageous to provide that the first segments 44 and the second segments 45 are positioned resting with their whole surface development on the first oblong elements 11 and/or on the second oblong elements 12.

In the solution shown in fig. 6, the first segments 44 and the second segments 45 overlap the first portions 16 of the first oblong elements 11 and/or the second oblong elements 12.

If they are connected in a single body, for example by gluing, the flat element 23 and the reticular structure 13 are sized so as to obtain a symmetrical distribution of the material with respect to the neutral axis of the whole compound structure 10. Consequently, the section sizes of the oblong segments 44 and 45, and those of the oblong elements 11 and 12, can be suitably sized.

The first oblong elements 11 are distanced from each other by a first distance D1. Merely by way of example the first distance D1 can be comprised between 80mm and 160mm, preferably between 100mm and 140mm.

The second oblong elements 12 are distanced from each other by a second distance D2. According to the solutions shown here, the second distance D2 is substantially equal to the first distance D1, even though it is not excluded that it may have different sizes, for example bigger or smaller.

In the solutions shown in the drawings, the first oblong elements 11 and the second oblong elements 12 can have a first distance D1 and a second distance D2 of 120mm x 120mm.

The first segments 44 are distanced from each other by a first pitch P1. Merely by way of example the first pitch P1 can be comprised between 15mm and 60mm, preferably between 20mm and 50mm. According to a possible solution, the first distance D1 is comprised between about 1 and 5 times the first pitch P1.

The second segments 45 are distanced from each other by a second pitch P2.

According to the solutions shown here, the first pitch P1 is substantially equal to the second pitch P2, even though it is not excluded that it may have different sizes, for example bigger or smaller.

According to a possible solution, the second distance D2 is comprised between about 1 and 5 times the second pitch P2.

In the case shown in fig. 6, the reticular structure 13 comprises oblong elements 11, 12 with a T-shape and an L-shape in the edges; they have a height of 32mm and a pitch between the oblong elements 11 and 12 of 120mm; the flat element 23 has a thickness of 8mm and a pitch between the oblong segments 44 and 45 of 40mm, that is, one third the pitch between the oblong elements 11 and 12. This allows the oblong elements 11 and 12 to be joined with the oblong segments 44 and 45 every three of the latter. With this conformation Applicant has obtained a greater rigidity of the compound structure with a saving in weight of about 30%.

In another variant shown in fig. 7, the compound structure 10 comprises the first reticular structure 13a associated with the second reticular structure 13b, in substantially the same way as described above with reference to figs. 2 and 3.

The flat element 23 is associated to at least one of either the first reticular structure 13a or the second reticular structure 13b, on the surface that faces toward the outside during use, with a conformation substantially similar to that described above.

According to the solution shown in fig. 7, the flat element 23 is associated with the second flat surface 15 of the first reticular structure 13a.

In particular, the flat element 23 can rest only on the first reticular structure 13a, or it can be attached to it by gluing, or with mechanical connection elements.

In this case the flat element 23 can have the function of dividing the stresses and an esthetical function, without collaborating with the support structure below.

In the solution shown in fig. 7 as well, the flat element 23 comprises first segments 44 and second segments 45 disposed according to a reticular configuration.

At least some of the first segments 44 and second segments 45 are located resting, with their whole surface development, on the first oblong elements 11 and/or the second oblong elements 12 of the reticular structure 13a or 13b.

An apparatus 25 for making a compound structure 10 is shown schematically in fig. 4.

The apparatus 25 comprises at least one mold 26; in this case a counter-mold 27 is also shown, able to be selectively coupled with the mold 26.

The mold 26 and counter-mold 27 are configured to define between them a molding cavity 28 into which the fibers are disposed to make a compound structure 10 as described above.

The molding cavity 28 is defined by a plurality of first oblong grooves 29, reproducing in negative the first oblong elements 11 of the compound structure 10, and by a plurality of second oblong grooves 30, reproducing in negative the second oblong elements 12 of the compound structure 10.

The first oblong grooves 29 are made reciprocally distanced and parallel to each other.

The second oblong grooves 30 are made reciprocally distanced and parallel to each other and crisscrossed, with no break in continuity, with respect to the first oblong grooves 29.

The second oblong grooves 30 can be located substantially orthogonal to the first oblong grooves 29.

According to the present invention, at least one of either the first oblong grooves 29 or the second oblong grooves 30 have a T- or L-shaped cross section as defined above with reference to the first oblong elements 11 and the second oblong elements 12.

The T- or L-shape consists of a first portion 31 and a second portion 32, transverse with respect to the first portion 31. The configuration and disposition of the first portion 31 and the second portion 32 of the first oblong grooves 29 and the second oblong grooves 30 is substantially equal to that of the first portion 16 and the second portion 17 of the first oblong elements 11 and the second oblong elements 12 of the compound structure 10.

As shown in fig. 4, the first oblong grooves 29 and the second oblong grooves 30, and therefore the molding cavity 28, are made completely in the mold 26, disposing the second portion 32 facing toward the outside. This prevents defining undercuts, and therefore disadvantages connected to the subsequent extraction of the reticular structure 13, 13a, 13b from the mold 26. This solution allows to define a mold 26, or matrix, upended compared with traditional solutions, which allows to position the fibers with a variable distribution in predefined positions depending on particular requirements. In this way it is possible to define zones of the reticular structure 13, 13a, 13b with differentiated resistances in the section of the oblong elements.

A method for making a compound structure 10 provides to make in a single body a plurality of first oblong elements 11 and a plurality of second oblong elements 12 with configurations similar to what was described above to define the reticular structure 13.

Examples of how to make the reticular structure 13 include injection or "Resin Transfer Molding" (RTM), infusion, press molding, hand molding or other types.

The monolithic reticular structure 13 can be obtained in an open mold or closed mold.

A method for molding compound structures 10 can be realised by means of an apparatus 25 as described above.

A possible molding method can comprise, merely by way of example:
- positioning reinforcement fibers inside the first oblong grooves 29 and second oblong grooves 30 of a molding cavity 28;
- possibly coupling the counter-mold 27 and the mold 26 to define the molding cavity 28;
- filling the molding cavity 28 with polymer resins in a viscous state to incorporate the reinforcement fibers;
- polymerizing the polymer resin;
- extracting the reticular structure 13.

It is clear that modifications and/or additions of parts may be made to the compound structure 10 of composite material and its method of production as described heretofore, without departing from the scope of the appended claims.

The surface of the flat element 23 that faces, during use, toward the outside, that is, is not directly coupled with the reticular structure 13, 13a, 13b, can be provided irregular, rough or knurled with an anti-slip function.

## Claims

1. Compound structure made of composite material, such as fiber-reinforced polymer resin, comprising first oblong elements (11) reciprocally distanced and parallel to each other and second oblong elements (12) reciprocally distanced and parallel to each other and crisscrossed with respect to the first oblong elements (11), said first oblong elements (11) and said second oblong elements (12) being made in a single body to define a reticular structure (13; 13a, 13b) with a monolithic flat shape, wherein at least one of either said first oblong elements (11) or said second oblong elements (12) have a cross section shape defined by a first portion (16) with an elongated quadrangular shape and by a second portion (17) with an elongated quadrangular shape, and wherein the first portion (16) is located incident against the second portion (17), wherein said compound structure comprises at least one flat element (23) overlapping and coupled with a surface of said reticular structure (13; 13a, 13b), **characterized in that** said flat element (23) has a reticular conformation, defined in a single body by first segments (44) and second segments (45) having an oblong development and disposed crisscrossed with respect to each other.

2. Compound structure as in claim 1, **characterized in that** both the first oblong elements (11) and the second oblong elements (12) have a cross section shape defined by said first portion (16) and said second portion (17).

3. Compound structure as in claim 1 or 2, **characterized in that** said reticular structure (13; 13a, 13b) has a first flat surface (14) and a second flat surface (15) opposite the first flat surface (14), **and in that** said first portion (16) is disposed, with its elongated development, incident toward the first flat surface (14) and said second portion (17) is disposed, with its elongated development, parallel to said second flat surface (15).

4. Compound structure as in claim 3, **characterized in that** said first portion (16) of the first oblong elements (11) and the second oblong elements (12) is disposed with its elongated development incident toward the first flat surface (14), and said second portion (17) of the first oblong elements (11) and the second oblong elements (12) is disposed with its elongated development parallel to said second flat surface (15).

5. Compound structure as in any claim hereinbefore, **characterized in that** it comprises a first reticular structure (13a) and a second reticular structure (13b) overlapping and reciprocally coupled.

6. Compound structure as in claim 5, **characterized in that** said first reticular structure (13a) and said second reticular structure (13b) are glued.

7. Compound structure as in claim 3 or 4, and 5 or 6, **characterized in that** said first reticular structure (13a) and said second reticular structure (13b) are coupled to each other with the respective first flat surfaces (14), to define cross sections of the compound structure (10) shaped like a double T or a C.

8. Compound structure as in any claim hereinbefore, **characterized in that** said flat element (23) is glued to said reticular structure (13; 13a, 13b).

9. Compound structure as in any claim hereinbefore, **characterized in that** at least some of the first segments (44) and the second segments (45) are disposed in a coordinated position with the first oblong elements (11) and/or respectively with the second oblong elements (12).

10. Compound structure as in any claim hereinbefore, **characterized in that** said first oblong elements (11) are distanced from each other by a first distance (D1) and said first segments (44) are distanced from each other by a first pitch (P1), said first distance (D1) being comprised between about 1 and 5 times the first pitch (P1), **and in that** said second oblong elements (12) are distanced from each other by a second distance (D2) and said second segments (45) are distanced from each other by a second pitch (P2), said second distance (D2) being comprised between about 1 and 5 times said second pitch (P2).

11. Compound structure as in claim 5, 6 or 7, **characterized in that** said flat element (23) is associated to at least one of either the first reticular structure (13a) or the second reticular structure (13b), on the surface that faces toward the outside during use.

12. Method for making a compound structure (10) of composite material, such as fiber-reinforced polymer resin, which provides to make in a single body first oblong elements (11) reciprocally distanced and parallel to each other and second oblong elements (12) reciprocally distanced and parallel to each other and crisscrossed with respect to the first oblong elements (11) to define a reticular structure (13; 13a, 13b) with a monolithic flat shape, wherein it provides to make at least one of either said first oblong elements (11) or said second oblong elements (12) with a cross section shape defined by a first portion (16) with an elongated quadrangular shape and by a second portion (17) with an elongated quadrangular shape, and wherein the first portion (16) is located incident against the second portion (17), wherein at least one flat element (23) overlaps and is coupled with said reticular structure (13, 13a, 13b), **characterized in that** said flat element (23) has a reticular conformation, defined in a single body by first segments (44) and second segments (45) having an oblong development and disposed crisscrossed with respect to each other.

13. Method as in claim 12, **characterized in that** a first reticular structure (13a) and a second reticular structure (13b) are overlapping and reciprocally coupled.

14. Method as in claim 13, **characterized in that** said first reticular structure (13a) and said second reticular structure (13b) are glued.

15. Method as in claim 13 or 14, **characterized in that** said first oblong elements (11) and said second oblong elements (12) of said first reticular structure (13a) are coupled to those of said second reticular structure (13b) so as to define cross sections of the compound structure (10) shaped like a double T or a C.

## Patentansprüche

1. Verbundstruktur, die aus einem Verbundmaterial hergestellt ist, wie z.B. faserverstärktem Polymerharz, aufweisend erste langgestreckte Elemente (11), die gegenseitig im Abstand sind und parallel zueinander sind, und zweite langgestreckte Elemente (12), die gegenseitig im Abstand sind und parallel zueinander sind und bezüglich der ersten langgestreckten Elemente (11) überkreuz sind, wobei die ersten langgestreckten Elemente (11) und die zweiten langgestreckten Elemente (12) aus einem einzigen Körper gemacht sind, um eine netzartige Struktur (13; 13a, 13b) mit einer monolithischen flachen Gestalt zu definieren, wobei wenigstens die einen von entweder den ersten langgestreckten Elementen (11) oder den zweiten langgestreckten Elementen (12) einen Querschnitt haben, der von einem ersten Abschnitt (16) mit einer langgestreckten Viereckform und von einem zweiten Abschnitt (17) mit einer langgestreckten Viereckform definiert ist, wobei der erste Abschnitt (16) gegen den zweiten Abschnitt (17) einfallend angeordnet ist, wobei die Verbundstruktur aufweist wenigstens ein flaches Element (23), das überlappt und verbunden ist mit einer Fläche der Netzstruktur (13; 13a, 13b), **dadurch gekennzeichnet, dass** das flache Element (23) eine netzförmige Gestalt hat, die in einem einzigen Körper definiert ist durch erste Segmente (44) und zweite Segmente (45), die eine langgestreckte Ausbildung haben und bezüglich einander überkreuz angeordnet sind.

2. Verbundstruktur gemäß Anspruch 1, **dadurch gekennzeichnet, dass** sowohl die ersten langgestreckten Elemente (11) als auch die zweiten langgestreckten Elemente (12) eine Querschnittsgestalt haben, die von dem ersten Abschnitt (16) und dem zweiten Abschnitt (17) definiert ist.

3. Verbundstruktur gemäß Anspruch 1 oder 2, **dadurch gekennzeichnet, dass** die Netzstruktur (13; 13a, 13b) eine erste flache Fläche (14) und eine zweite flache Fläche (15) hat, die zu der ersten flachen Fläche (14) entgegengesetzt ist, und dass der erste Abschnitt (16) mit seiner langgestreckten Ausbildung auf die erste flache Fläche (14) einfallend angeordnet ist und der zweite Abschnitt (17) mit seiner langgestreckten Ausbildung parallel zu der zweiten Fläche (15) angeordnet ist.

4. Verbundstruktur gemäß Anspruch 3, **dadurch gekennzeichnet, dass** der erste Abschnitt (16) der ersten langgestreckten Elemente (11) und der zweiten langgestreckten Elemente (12) mit seiner langgestreckten Ausbildung auf die erste flache Fläche (14) einfallend angeordnet ist und der zweite Abschnitt (17) der ersten langgestreckten Elemente (11) und der zweiten langgestreckten Elemente (12) mit seiner langgestreckten Ausbildung parallel zu der zweiten flachen Fläche (15) angeordnet ist.

5. Verbundstruktur gemäß irgendeinem vorhergehenden Anspruch, **dadurch gekennzeichnet, dass** sie aufweist eine erste netzartige Struktur (13a) und eine zweite netzartige Struktur (13b), die überlappen und gegenseitig gekuppelt sind.

6. Verbundstruktur gemäß Anspruch 5, **dadurch gekennzeichnet, dass** die erste netzartige Struktur (13a) und die zweite netzartige Struktur (13b) verklebt sind.

7. Verbundstruktur gemäß Anspruch 3 oder 4, und 5 oder 6, **dadurch gekennzeichnet, dass** die erste netzartige Struktur (13a) und die zweite netzartige Struktur (13b) miteinander gekuppelt sind mit den jeweiligen ersten flachen Flächen (14), um Querschnitte der Verbundstruktur (10) zu definieren, die wie ein Doppel-T oder ein C gestaltet sind.

8. Verbundstruktur gemäß irgendeinem vorhergehenden Anspruch, **dadurch gekennzeichnet, dass** das flache Element (23) an die netzförmige Struktur (13; 13a, 13b) geklebt ist.

9. Verbundstruktur gemäß irgendeinem vorhergehenden Anspruch, **dadurch gekennzeichnet, dass** wenigstens einige der ersten Segmente (44) und der zweiten Segmente (45) in einer koordinierten Position mit den ersten langgestreckten Elementen (11) und/oder respektive mit den zweiten langgestreckten Elementen (12) angeordnet sind.

10. Verbundstruktur gemäß irgendeinem vorherigen Anspruch, **dadurch gekennzeichnet, dass** die ersten langgestreckten Elemente (11) voneinander im Abstand sind um einen ersten Abstand (D1) und die ersten Segmente (44) voneinander im Abstand sind um einen ersten Zwischenabstand (P1), wobei der erste Abstand (D1) zwischen etwa dem 1- und 5-fachen des ersten Zwischenabstands (P1) liegt, und dass die zweiten langgestreckten Elemente (12) voneinander im Abstand sind um einen zweiten Abstand (D2) und die zweiten Segmente (45) voneinander im Abstand sind um einen zweiten Zwischenabstand (P2), wobei der zweite Abstand (D2) zwischen etwa dem 1- und 5-fachen des zweiten Zwischenabstands (P2) liegt.

11. Verbundstruktur gemäß Anspruch 5, 6 oder 7, **dadurch gekennzeichnet, dass** das flache Element (23) wenigstens einer von der ersten netzförmigen Struktur (13a) oder der zweiten netzförmigen Struktur (13b) zugeordnet ist an der Fläche, die während der Verwendung zur Außenseite hingewandt ist.

12. Verfahren zum Herstellen einer Verbundstruktur (10) aus Verbundmaterial, wie z.B. faserverstärktem Polymerharz, welches bereitstellt, zu erstellen, in einem einzigen Körper, erster langgestreckter Elemente (11), die gegenseitig im Abstand sind und parallel zueinander sind, und zweiter langgestreckter Elemente (12), die gegenseitig im Abstand sind und parallel zueinander sind und bezüglich der ersten langgestreckten Elemente (11) überkreuz sind, um eine netzförmige Struktur (13; 13a, 13b) mit einer monolithischen flachen Gestalt zu definieren, wobei es bereitstellt, zu erstellen wenigstens die einen von den ersten langgestreckten Elementen (11) oder den zweiten langgestreckten Elementen (12) mit einer Querschnittsgestalt, die definiert ist von einem ersten Abschnitt (16) mit einer langgestreckten viereckigen Gestalt und von einem zweiten Abschnitt (17) mit einer langgestreckte viereckigen Gestalt, und wobei der erste Abschnitt (16) gegen den zweiten Abschnitt (17) einfallend angeordnet ist, wobei wenigstens ein flaches Element (23) überlappt und verbunden ist mit der netzförmigen Struktur (13, 13a, 13b), **dadurch gekennzeichnet, dass** das flache Element (23) eine netzförmige Gestalt hat, definiert in einem einzigen Körper von ersten Segmenten (44) und zweiten Segmenten (45), die eine langgestreckte Ausbildung haben und bezüglich einander überkreuz angeordnet sind.

13. Verfahren gemäß Anspruch 12, **dadurch gekennzeichnet, dass** eine erste netzförmige Struktur (13a) und eine zweite netzförmige Struktur (13b) überlappen und gegenseitig gekuppelt sind.

14. Verfahren gemäß Anspruch 13, **dadurch gekennzeichnet, dass** die erste netzförmige Struktur (13a) und die zweite netzförmige Struktur (13b) verklebt sind.

15. Verfahren gemäß Anspruch 13 oder 14, **dadurch gekennzeichnet, dass** die ersten langgestreckten Elemente (11) und die zweiten langgestreckten Elemente (12) der ersten netzförmigen Struktur (13a) mit jenen der zweiten netzförmigen Struktur (13b) gekuppelt werden, um Querschnitte der Verbundstruktur (10) zu definieren, die wie ein Doppel-T oder ein C gestaltet sind.

## Revendications

1. Structure de composé en matériau composite, telle qu'une résine polymère renforcée par des fibres, comprenant des premiers éléments oblongs (11) mutuellement séparés et parallèles les uns aux autres et des seconds éléments oblongs (12) mutuellement séparés et parallèles les uns aux autres, et entrecroisés par rapport aux premiers éléments oblongs (11), lesdits premiers éléments oblongs (11) et lesdits seconds éléments oblongs (12) étant réalisés en un seul corps pour définir une structure réticulaire (13 ; 13a, 13b) ayant une forme plate monolithique, dans laquelle au moins l'un desdits premiers éléments oblongs (11) ou desdits seconds éléments oblongs (12) a une forme de section transversale définie par une première partie (16) de forme quadrangulaire allongée et par une seconde partie (17) de forme quadrangulaire allongée, et dans laquelle la première partie (16) est située incidente contre la seconde partie (17), dans laquelle ladite structure de composé comprend au moins un élément plat (23) chevauchant et couplé à une surface de ladite structure réticulaire (13 ; 13a, 13b), **caractérisée en ce que** ledit élément plat (23) possède une conformation réticulaire, définie en un seul corps par des premiers segments (44) et des seconds segments (45) à développement oblong et disposés entrecroisés les uns par rapport aux autres.

2. Structure de composé selon la revendication 1, **caractérisée en ce que** les premiers éléments oblongs (11) et les seconds éléments oblongs (12) ont une forme de section transversale définie par ladite première partie (16) et ladite seconde partie (17).

3. Structure de composé selon la revendication 1 ou 2, **caractérisée en ce que** ladite structure réticulaire (13 ; 13a, 13b) a une première surface plate (14) et une seconde surface plate (15) opposée à la première surface plate (14), et **en ce que** ladite première partie (16) est disposée, avec son développement allongé, incidente vers la première surface plate (14) et ladite seconde partie (17) est disposée avec son développement allongé parallèlement à ladite seconde surface plate (15).

4. Structure de composé selon la revendication 3, **caractérisée en ce que** ladite première partie (16) des premiers éléments oblongs (11) et des seconds éléments oblongs (12) est disposée avec son développement allongé incident vers la première surface plate (14), et ladite seconde partie (17) des premiers éléments oblongs (11) et des seconds éléments oblongs (12) est disposée avec son développement allongé parallèle à ladite seconde surface plate (15).

5. Structure de composé selon l'une quelconque des revendications précédentes, **caractérisée en ce qu'**elle comprend une première structure réticulaire (13a) et une seconde structure réticulaire (13b) qui se chevauchent et sont couplées de manière réciproque.

6. Structure de composé selon la revendication 5, **caractérisée en ce que** ladite première structure réticulaire (13a) et ladite seconde structure réticulaire (13b) sont collées.

7. Structure de composé selon la revendication 3 ou 4, et 5 ou 6, **caractérisée en ce que** ladite première structure réticulaire (13a) et ladite seconde structure réticulaire (13b) sont couplées l'une à l'autre avec les premières surfaces plates respectives (14), pour définir des sections transversales de la structure de composé (10) mises en forme comme un double T ou un C.

8. Structure de composé selon l'une quelconque des revendications précédentes, **caractérisée en ce que** ledit élément plat (23) est collé à ladite structure réticulaire (13 ; 13a, 13b).

9. Structure de composé selon l'une quelconque des revendications précédentes, **caractérisée en ce qu'**au moins certains des premiers segments (44) et des seconds segments (45) sont disposés dans une position coordonnée avec les premiers éléments oblongs (11) et/ou respectivement avec les seconds éléments oblongs (12).

10. Structure de composé selon l'une quelconque des revendications précédentes, **caractérisée en ce que** lesdits premiers éléments oblongs (11) sont séparés les uns des autres d'une première distance (D1) et lesdits premiers segments (44) sont séparés les uns des autres d'un premier pas (P1), ladite première distance (D1) étant comprise entre environ 1 et 5 fois le premier pas (P1), et **en ce que** lesdits seconds éléments oblongs (12) sont séparés les uns des autres d'une seconde distance (D2) et lesdits seconds segments (45) sont séparés les uns des autres d'un second pas (P2), ladite seconde distance (D2) étant comprise entre environ 1 et 5 fois ledit second pas (P2).

11. Structure de composé selon la revendication 5, 6 ou 7, **caractérisée en ce que** ledit élément plat (23) est associé à au moins l'une de la première structure réticulaire (13a) ou de la seconde structure réticulaire (13b), sur la surface qui fait face à l'extérieur en cours d'utilisation.

12. Procédé de fabrication d'une structure de composé (10) en matériau composite, tel qu'une résine polymère renforcée par des fibres, qui permet de fabriquer en un corps unique des premiers éléments oblongs (11) mutuellement séparés et parallèles les uns aux autres et des seconds éléments oblongs (12) mutuellement séparés et parallèles les uns aux autres, et entrecroisés par rapport aux premiers éléments oblongs (11) pour définir une structure réticulaire (13 ; 13a, 13b) ayant une forme plate monolithique, dans lequel il est prévu de réaliser au moins l'un desdits premiers éléments oblongs (11) ou desdits seconds éléments oblongs (12) ayant une forme de section transversale définie par une première partie (16) ayant une forme quadrangulaire allongée et par une seconde partie (17) ayant une forme quadrangulaire allongée, et dans lequel la première partie (16) est situé incidente contre la seconde partie (17), dans lequel au moins un élément plat (23) chevauche et est couplé à ladite structure réticulaire (13, 13a, 13b), **caractérisé en ce que** ledit élément plat (23) a une conformation réticulaire, définie en un corps unique par des premiers segments (44) et des seconds segments (45) à développement oblong et disposés entrecroisés les uns par rapport aux autres.

13. Procédé selon la revendication 12, **caractérisé en ce qu'**une première structure réticulaire (13a) et une seconde structure réticulaire (13b) se chevauchent et sont couplées de manière réciproque.

14. Procédé selon la revendication 13, **caractérisé en ce que** ladite première structure réticulaire (13a) et ladite seconde structure réticulaire (13b) sont collées.

15. Procédé selon la revendication 13 ou 14, **caractérisé en ce que** lesdits premiers éléments oblongs (11) et lesdits seconds éléments oblongs (12) de ladite première structure réticulaire (13a) sont couplés à ceux de ladite seconde structure réticulaire (13b) de manière à définir des sections transversales de la structure de composé (10) mises en forme comme un double T ou un C.
